# FASCICULE DE BREVET EUROPEEN

(11) **EP 3 530 633 B1**
(45) Date de publication et mention de la délivrance du brevet: **12.08.2020**
(21) Numéro de dépôt: 19159774.9
(22) Date de dépôt: 27.02.2019
(51) Int. Cl.: C04B 38/00, B01D 46/24, C04B 35/01, C04B 35/10, C04B 35/185, C04B 35/447, C04B 35/48, C04B 35/626, C04B 35/638

(54) **STRUCTURE EN NID D'ABEILLE EN MATÉRIAU CÉRAMIQUE ET PROCÉDÉ DE FABRICATION ASSOCIÉ**
KERAMISCHE WABENSTRUKTUR UND VERFAHREN ZUR HERSTELLUNG DAVON
CERAMIC HONEYCOMB STRUCTURE AND ASSOCIATED MANUFACTURING METHOD

(30) Priorité: 27.02.2018 FR 1800172
(43) Date de publication de la demande: 28.08.2019
(73) Titulaire: Dassault Aviation, 75008 Paris (FR)
(72) Inventeur: SOLA, Guy, 78310 Maurepas (FR); GARDELLE, Bastien, 33701 Merignac (FR)
(74) Mandataire: Lavoix

(56) Documents cités:
- WO-A1-2016/024058
- WO-A1-2016/181073
- FR-A1- 3 001 409

## Description

La présente invention concerne une structure en nid d'abeille selon la revendication 1.

La structure en nid d'abeille est notamment destinée à former une partie d'une pièce structurale d'aéronef, en particulier d'une pièce destinée à être placée au niveau d'une partie chaude de l'aéronef, comme le moteur ou la sortie d'une tuyère, ou au niveau de l'arrière-corps d'un aéronef.

Les cahiers des charges imposent généralement des spécifications très strictes pour une telle pièce structurale. La pièce doit notamment présenter une densité la plus faible, de bonnes propriétés thermo-mécaniques afin de supporter les fortes contraintes subies par l'aéronef, notamment les changements de température et de pression importants et les accélérations.

La pièce doit en outre être propre à présenter des formes tridimensionnelles complexes, notamment à présenter des parties courbes.

De plus, la pièce structurale doit être stable à haute température, notamment à des températures dépassant 500°C.

Enfin, la pièce structurale doit rester économique et son procédé de fabrication doit donc être simple à réaliser.

Les pièces structurales utilisées dans le domaine aéronautique sont généralement réalisés en matériau métallique, tel que le titane.

Toutefois, les matériaux métalliques présentent une densité importante et une stabilité à haute température assez faible. Leurs propriétés peuvent être dégradées à des températures supérieures à 400°C, ce qui limite leur utilisation en tant qu'éléments structuraux au niveau des parties chaudes de l'aéronef, où la température peut dépasser 500°C.

Des matériaux composites sont aussi utilisés dans certains éléments structuraux de l'aéronef. Ceci est le cas par exemple pour les voilures qui peuvent comporter du carbone imprégné d'une résine polymère. Bien que moins denses que les matériaux métalliques, ces matériaux composites ne sont pas stables non plus à des températures supérieures à 150°C.

Le document FR 3 001 409 décrit un procédé de fabrication d'un matériau d'âme de type nid d'abeille en matériau céramique. Une structure fibreuse tissée est imprégnée d'une résine précurseur de céramique, puis est déployée sur un outillage de maintien afin de donner à la structure une forme courbée. Enfin, la résine de la structure fibreuse est polymérisée de manière à former une structure alvéolaire courbée.

Un tel procédé ne donne cependant pas entière satisfaction. En effet, il est très difficile de réaliser avec ce procédé des pièces présentant des géométries complexes, comme plusieurs variations de courbure et des courbures de faibles rayons. De plus, il est complexe de fixer directement par collage des peaux composites sur cette structure alvéolaire, aucune colle n'assurant une tenue mécanique suffisante à haute température entre un matériau céramique et une peau composite avec une si faible surface de collage entre les parois de la structure alvéolaire et la peau composite.

Le document WO 2016/181073 divulgue un panneau composite comprenant une structure sandwich formée par une âme centrale présentant une structure alvéolaire primaire du type nid d'abeille, prise en sandwich entre deux peaux, la structure alvéolaire primaire comprenant un réseau d'alvéoles principales, le panneau composite étant caractérisé en ce qu'il comprend une pluralité de chevilles, chaque cheville étant d'une part, agencée pour se loger et coopérer à l'intérieur d'une alvéole principale et, d'autre part, formée d'une structure alvéolaire secondaire comprenant un réseau d'alvéoles secondaires, et en ce qu'il comprend au moins une zone de courbure, les chevilles étant localisées au niveau de ladite zone de courbure.

Un but de l'invention est d'obtenir une pièce structurale pour aéronef qui soit légère et de forme adaptable à la géométrie d'utilisation, tout en étant très stable mécaniquement à haute température. A cet effet, l'invention a pour objet une structure en nid d'abeille selon la revendication 1.

La structure en nid d'abeille selon l'invention peut comprendre l'une ou plusieurs des caractéristiques des revendications 2 à 12, prise(s) isolément ou suivant toute combinaison techniquement possible.

L'invention a également pour objet un procédé de fabrication d'une structure en nid d'abeille selon la revendication 13.

Le procédé selon l'invention peut comprendre l'une ou plusieurs des caractéristiques des revendications 14 et 15, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue schématique en perspective d'une première pièce structurale d'aéronef selon l'invention comprenant une structure en nid d'abeille ;
- la figure 2 est une vue du dessus de la structure en nid d'abeille de la première pièce selon l'invention, les peaux ayant été omises de la vue ;
- la figure 3 est une vue en coupe selon l'axe III-III de la structure représentée sur la figure 2 ;
- la figure 4 est une vue partielle schématique en perspective d'une alvéole comprenant un rebord selon un mode de réalisation particulier ;
- la figure 5 est une vue schématique de la paroi d'une alvéole selon un mode de réalisation particulier ; et
- la figure 6 est une vue schématique d'une deuxième pièce structurale selon l'invention.

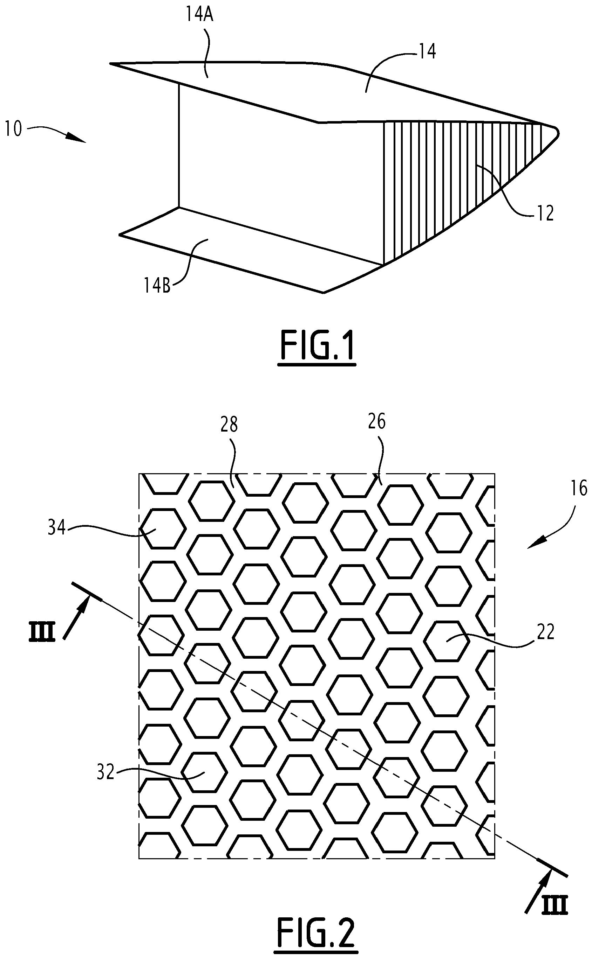

Une première pièce structurale 10 selon l'invention est représentée schématiquement sur la figure 1.

La pièce structurale 10 est destinée à être montée en particulier au niveau d'une partie chaude d'un aéronef, en particulier au niveau du moteur ou à la sortie d'une tuyère.

La pièce structurale 10 comporte un corps de base 12 et au moins une peau 14 rapportée sur le corps de base 12.

Le corps de base 12 est une structure en nid d'abeille 16, aussi communément appelée « structure NIDA ».

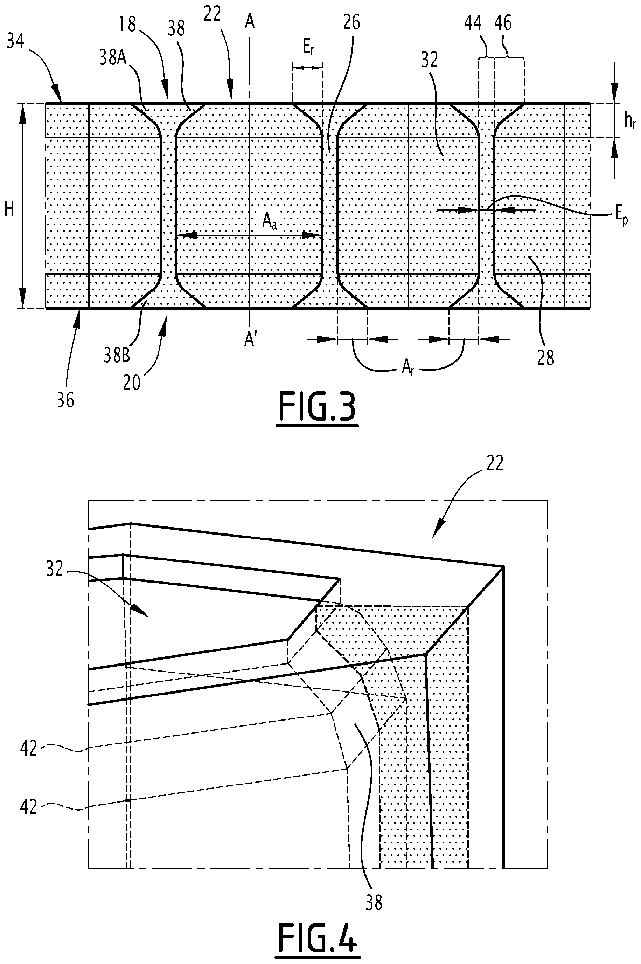

La structure en nid d'abeille 16 présente une première face 18 et une deuxième face 20, comme visible sur la figure 3. Dans l'exemple représenté sur cette figure, la première face 18 et la deuxième face 20 sont sensiblement parallèles l'une par rapport à l'autre. La pièce structurale 10 est ainsi plane, au moins dans la région illustrée.

La structure en nid d'abeille 16 comporte une pluralité d'alvéoles 22.

Chaque alvéole 22 présente un axe central A-A'.

Chaque alvéole 22 présente une section transversale prise perpendiculairement à l'axe central A-A' en forme de polygone, ici hexagonale.

Chaque alvéole 22 présente une paroi périphérique 26. Lorsque l'alvéole 22 présente une section transversale polygonale, chaque paroi 26 comprend une pluralité de côtés 28 adjacents les uns avec les autres.

Dans le premier mode de réalisation représenté sur la figure 2, chaque paroi 26 comprend six côtés 28.

Un côté 28 est généralement commun à deux alvéoles 22 voisines. Un côté 28 peut appartenir à une seule alvéole 22 lorsque ladite alvéole 22 se situe sur le bord de la structure en nid d'abeille 16.

Chaque côté 28 présente une hauteur H et une épaisseur Eₚ. La hauteur H est la dimension du côté 28 selon l'axe A-A'. L'épaisseur Eₚ est la dimension du côté 28 selon une direction normale au côté 28.

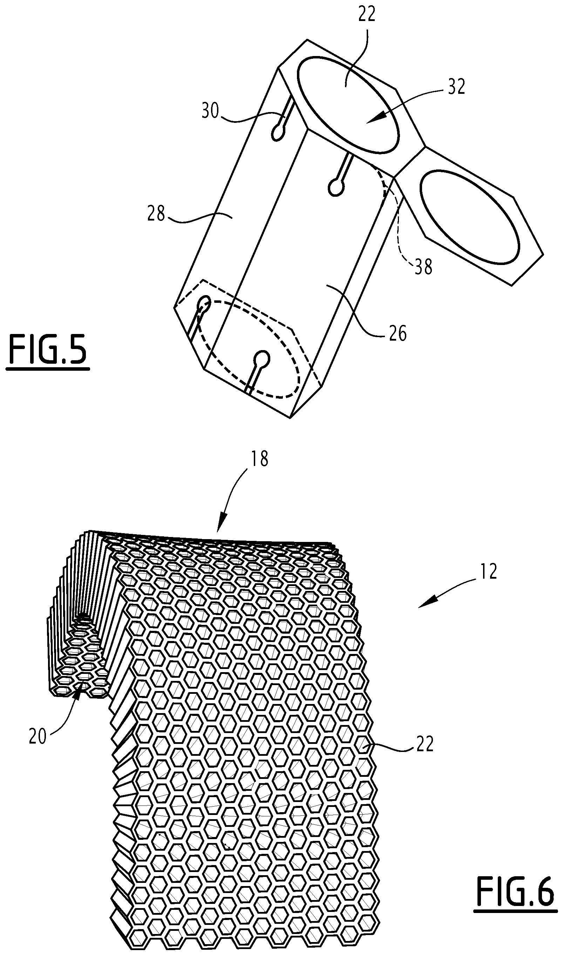

Selon un mode de réalisation particulier représenté sur la figure 5, la paroi 26 d'au moins une des alvéoles 22 présente au moins un évidement 30. De préférence, chaque côté 28 présente au moins un évidement 30.

L'aire totale du ou des évidement(s) 30 présente(s) sur le côté 28 est avantageusement comprise entre 1% et 5% de l'aire dudit côté 28. Il est ainsi possible de réduire la densité de la structure alvéolaire, sans toutefois en menacer l'intégrité mécanique.

L'évidement 30 comprend par exemple une entaille, un trou rond, ou tout autre type d'évidement. L'évidement 30 traverse la paroi 26 sur toute son épaisseur Eₚ.

La paroi 26 délimite intérieurement dans l'alvéole 22 une cavité traversante 32 qui présente une section transversale présentant une aire maximale Aₐ.

La cavité traversante 32 débouche sur la première face 18 de la structure en nid d'abeille 16 au niveau d'une première ouverture 34. Elle débouche sur la deuxième face 20 de la structure en nid d'abeille 16 au niveau d'une deuxième ouverture 36.

Au moins une alvéole 22 comporte au moins un rebord 38.

Le rebord 38 est venu de matière avec la paroi 26 de l'alvéole 22, c'est-à-dire que la paroi 26 et le rebord 38 sont réalisés d'un seul tenant.

Le rebord 38 fait saillie par rapport à la paroi 26 vers l'axe central A-A' au niveau d'une des ouvertures 34, 36. Avantageusement, chaque alvéole 22 comporte un premier rebord 38A en saillie dans la première ouverture 34 et un deuxième rebord 38B en saillie dans la deuxième ouverture 36.

Le premier rebord 38A et le deuxième rebord 38B définissent entre eux une région intermédiaire de la paroi 26. Avantageusement, l'épaisseur Eₚ de la paroi 26 dans ladite région intermédiaire est constante et est comprise entre 0,2 millimètre et 1,0 millimètre. En particulier, l'épaisseur Eₚ dans la région intermédiaire est supérieure ou égale à 0,40 millimètre et inférieure ou égale à 0,60 millimètre.

Dans le mode de réalisation représenté sur la figure 3, l'aire de la section transversale de la cavité traversante 32 est constante et maximale dans la région intermédiaire.

Le rebord 38 obture seulement partiellement l'ouverture 34, 36. Le rebord 38 laisse au moins partiellement débouchant ladite ouverture 34, 36 en définissant une lumière centrale.

Le rebord 38 s'étend continûment sur toute la périphérie de l'ouverture 34, 36.

L'aire Aᵣ de la section transversale du rebord 38 prise perpendiculairement à l'axe A-A' au niveau de l'ouverture 34, 36 est comprise entre 1% et 75% de l'aire maximale Aₐ de la section transversale de la cavité traversante 32.

De préférence, l'aire Aᵣ de la section transversale du rebord 38 au niveau de l'ouverture 34, 36 est comprise entre 30% et 50% de l'aire maximale Aₐ de la section transversale de la cavité traversante 32. Le rebord 38 crée ainsi une surface d'appui suffisante pour faciliter l'adhésion de la peau 14 sur le corps de base 12, sans augmenter de façon excessive la densité de la structure en nid d'abeille 16.

Le rebord 38 présente une épaisseur Eᵣ maximale mesurée perpendiculairement à l'axe central A-A' au niveau de l'ouverture 34, 36.

Le rebord 38 présente également une hauteur hᵣ maximale mesurée parallèlement à l'axe A-A'.

De préférence, le rebord 38 présente une épaisseur Eᵣ maximale inférieure ou égale à 100% de la hauteur hᵣ du rebord 38, de préférence inférieure ou égale à 80% de la hauteur hᵣ du rebord 38.

Ce rapport garantit un compromis entre le maintien de l'intégrité mécanique du rebord 38 et la minimisation de la densité de la structure en nid d'abeille 16.

La structure en nid d'abeille 16 présente une densité supérieure ou égale à 0,46 et inférieure ou égale à 0,69, tout en conservant de bonnes performances mécaniques.

Le rebord 38 présente de préférence un profil s'effilant vers son bord libre, en direction de l'axe central A-A'. Le rebord 38 présente par exemple un profil biseauté ou un profil arrondi.

Dans le mode de réalisation particulier représenté sur la figure 4, chaque rebord 38 présente plusieurs faces délimitées par des arêtes 42.

La paroi 26 et le rebord 38 venu de matière avec la paroi 26 définissent respectivement une surface extérieure 44, 46 au niveau de la face 18, 20.

La surface extérieure 44 de la paroi 26, formée par la tranche de la paroi 26, affleure avec la surface extérieure 46 du rebord 38. Il est entendu par « affleure » que la transition entre la surface extérieure 44 de la paroi 26 et la surface extérieure 46 du rebord 38 est dépourvue d'arête ou de relief.

Selon l'exemple représenté sur la figure 3, la surface extérieure 44 de la paroi 26 et la surface extérieure 46 du rebord 38 définissent un appui plan continu sur la face 18, 20. La présence du rebord 38 augmente l'aire disponible pour l'appui des peaux 14 au niveau des faces 18, 20, assurant une plus grande surface d'adhérence pour la fixation des peaux 14 sur le corps de base 12.

La structure en nid d'abeille 16 est avantageusement réalisée en un matériau céramique ou en un mélange de matériaux, au moins un des matériaux du mélange étant un matériau céramique.

Le matériau céramique est par exemple choisi dans le groupe constitué de l'alumine, de l'hydroxyapatite, de la mullite et de la zircone.

Les parois 26 des alvéoles 22 et le ou les rebord(s) 38 sont obtenus de préférence par stéréolithographie.

La pièce structurale 10 comporte une première peau surfacique 14A qui s'étend sur la première face 18 de la structure en nid d'abeille 16 et une deuxième peau 14B qui s'étend sur la deuxième face 20.

Chaque peau 14A, 14B est dans cet exemple une peau composite. La peau composite est notamment de type Ox/Ox.

Il est entendu par « peau composite de type Ox/Ox » une peau réalisée par tissage d'une structure fibreuse de fibres d'oxyde, par exemple de fibres d'alumine (Al₂O₃) renforcée par une matrice céramique, par exemple une matrice géopolymère.

La peau 14 composite est fixée sur au moins une des faces 18, 20 sur laquelle affleure au moins un rebord 38.

Un procédé de fabrication de la structure en nid d'abeille 16 selon ce premier mode de réalisation va maintenant être décrit.

Initialement, un mélange comprenant une poudre céramique et une résine organique photosensible est réalisé.

La poudre céramique est avantageusement choisie dans le groupe constitué des poudres d'alumine, de zircone, d'hydroxyapatite et de mullite et de toute autre poudre permettant d'obtenir d'autres propriétés physiques désirées.

De préférence, la poudre céramique n'absorbe pas les rayonnements ultra-violets. La cinétique de polymérisation de la résine organique est ainsi suffisante pour une fabrication industrielle de la structure en nid d'abeille 16.

Puis, une structure en nid d'abeille 16 comprenant une pluralité d'alvéoles 22 est fabriquée par stéréolithographie en réalisant des tranches successives de la structure 16 entre la première face 18 et la deuxième face 20.

Comme indiqué plus haut, ceci implique la formation de chaque alvéole 22 comprenant une paroi 26 délimitant une cavité traversante 32 débouchant sur une première face 18 et une deuxième face 20 respectivement au niveau d'une première ouverture 34 et d'une deuxième ouverture 36. Au moins une alvéole 22 comprend un rebord 38 venu de matière avec la paroi 26 et en saillie de ladite paroi 26 au niveau d'au moins une des ouvertures 34, 36. Le rebord 38 est réalisé directement avec la paroi 26 lors de l'étape de stéréolithographie.

Lors de cette étape de fabrication, la résine organique photosensible est photopolymérisée par un faisceau laser ultra-violet et la structure en nid d'abeille 16 est réalisée par couches successives à partir d'un modèle informatique.

La structure en nid d'abeille 16 obtenue est ensuite nettoyée avec un solvant. Le solvant est injecté par un flux d'air à l'intérieur des cavités traversantes 32 à travers les lumières. L'étape de nettoyage permet de retirer toute trace de mélange n'ayant pas été polymérisé.

Puis, la structure en nid d'abeille 16 subit une étape de déliantage thermique au cours de laquelle le matériau organique est dégradé thermiquement.

L'étape de déliantage se fait sous atmosphère inerte à une température comprise entre 800°C et 1200°C.

Ensuite, la structure en nid d'abeille 16 est chauffée sous oxygène à une température comprise entre 1500°C et 1800°C pour effectuer un frittage. L'étape de frittage permet de densifier la structure en nid d'abeille 16 et d'en réduire le taux de porosité. Avantageusement, le taux de porosité de la structure 16 après l'étape de frittage est inférieur ou égal à 1%. Plus le taux de porosité est faible, meilleures sont la ténacité et la dureté de la structure en nid d'abeille 16.

Une peau composite 14 est ensuite plaquée sur une face 18, 20 de la structure en nid d'abeille 16 sur laquelle affleure un rebord 38. La peau 14 est en contact avec la surface d'appui 44, 46.

Puis, la pièce structurale 10 subit une étape de chauffage afin de rigidifier la peau 14 et la fixer sur la structure 16. La présence du rebord 38 assure ainsi sur la face 18, 20 un appui d'aire suffisante pour assurer la liaison entre la structure en nid d'abeille 16 et la peau composite 14.

L'étape de fixation de la peau 14 sur la face 18, 20 de la structure en nid d'abeille 16 est ainsi dépourvue d'une étape intermédiaire d'ajout de colle.

Dans un deuxième mode de réalisation représenté sur la figure 6, au moins une des faces 18, 20 est courbe.

De préférence, ladite face 18, 20 présente un rayon de courbure compris entre 30 millimètres et 100 millimètres, préférentiellement compris entre 40 millimètres et 60 millimètres.

Selon un mode de réalisation particulier, chaque face est courbe, chaque face présentant de préférence un rayon de courbure compris entre 30 millimètres et 100 millimètres, préférentiellement compris entre 40 millimètres et 60 millimètres.

Selon un mode de réalisation particulier, au moins une des faces présente une structure de paraboloïde hyperbolique, aussi connue sous le nom de structure de « selle de cheval ».

La surface extérieure 44 de la paroi 26 et la surface extérieure 46 du rebord 38 en saillie de ladite paroi 26 définissent une surface d'appui courbe et lisse, de sorte que la peau 14 est en contact avec l'intégralité de la surface d'appui 44, 46.

En variante, l'aire de la section transversale de la cavité traversante 32 n'est pas constante le long de l'axe A-A' dans la région intermédiaire située entre les rebords 38. Par exemple, l'aire de la section transversale de la cavité traversante 32 au niveau de la première face 18 est inférieure à l'aire de la section transversale de la cavité traversante 32 au niveau de la deuxième face 20.

La pièce structurale 10 adopte ainsi des formes géométriques complexes, comprenant notamment plusieurs rayons de courbure. Grâce au procédé de fabrication selon l'invention, la pièce structurale 10 reste simple à fabriquer et ses formes peuvent être ajustées suivant les fonctions auxquelles elle est destinée.

La pièce structurale 10 est en outre apte à supporter des températures élevées, notamment supérieures à 500°C. Elle est donc particulièrement propre à être placée au niveau des parties chaudes de l'aéronef, comme le moteur ou la sortie d'une tuyère.

La présence d'un rebord 38 sur la structure en nid d'abeille 16 améliore l'application et la fixation des peaux composites 14 sur la structure. La pièce structurale 10 ainsi obtenue conserve une densité faible, tout en préservant des performances mécaniques compatibles avec les exigences du domaine aéronautique.

La structure en nid d'abeille 16 est aussi apte à servir de matériau d'âme à un panneau acoustique d'une nacelle d'un aéronef.

## Revendications

1. Structure en nid d'abeille (16) en matériau céramique comprenant une pluralité d'alvéoles (22), chaque alvéole (22) comprenant une paroi périphérique (26) délimitant une cavité traversante (32), la cavité traversante (32) débouchant sur une première face (18) et sur une deuxième face (20) au niveau respectivement d'une première ouverture (34) et d'une deuxième ouverture (36), dans laquelle au moins une alvéole (22) comprend un rebord (38) venu de matière avec la paroi (26) de l'alvéole (22) et en saillie à partir de ladite paroi (26) au niveau d'au moins une des ouvertures (34, 36).

2. Structure (16) selon la revendication 1, dans laquelle la paroi (26) et le rebord (38) venu de matière avec ladite paroi (26) présentent chacun une surface extérieure (44 ; 46) au niveau de l'ouverture (34 ; 36), la surface extérieure (44) de la paroi (26) affleurant avec la surface extérieure (46) du rebord (38).

3. Structure (16) selon l'une quelconque des revendications 1 ou 2, dans laquelle le rebord (38) obture seulement partiellement l'ouverture (34 ; 36).

4. Structure (16) selon l'une quelconque des revendications 1 à 3, dans laquelle l'aire (Aᵣ) de la section transversale du rebord (38) prise au niveau de l'ouverture (34 ; 36) est comprise entre 1% et 75% de l'aire maximale (Aₐ) de la section transversale de la cavité traversante (32), préférentiellement entre 30% et 50% de l'aire maximale (Aₐ) de la section transversale de la cavité traversante (32).

5. Structure (16) selon l'une quelconque des revendications 1 à 4, dans laquelle le rebord (38) présente un profil effilé vers son bord libre.

6. Structure (16) selon l'une quelconque des revendications 1 à 5, dans laquelle le rebord (38) présente une épaisseur (Eᵣ) maximale inférieure ou égale à 100% de la hauteur (hᵣ) du rebord (38), de préférence inférieure ou égale à 80% de la hauteur (hᵣ) du rebord (38).

7. Structure (16) selon l'une quelconque des revendications 1 à 6, dans laquelle chaque alvéole (22) présente une section transversale polygonale, de préférence hexagonale.

8. Structure (16) selon l'une quelconque des revendications 1 à 7, dans laquelle au moins une de la première face (18) et de la deuxième face (20) est courbe, ladite (18 ; 20) face présentant avantageusement un rayon de courbure d'au moins 40 millimètres.

9. Structure (16) selon la revendication 8, dans laquelle chaque face (18 ; 20) est courbe, chaque face (18 ; 20) présentant avantageusement un rayon de courbure d'au moins 40 millimètres.

10. Structure (16) selon l'une quelconque des revendications 1 à 9, dans laquelle la paroi (26) d'au moins une des alvéoles (22) présente au moins un évidement (30).

11. Structure (16) selon l'une quelconque des revendications 1 à 10, dans laquelle les parois (26) des alvéoles (22) et le ou les rebords (38) sont obtenus par stéréolithographie.

12. Structure (16) selon l'une quelconque des revendications 1 à 11, dans laquelle une peau (14) composite est fixée sur au moins une des faces (18 ; 20) sur laquelle affleure au moins un rebord (38), la peau (14) étant liée à chaque rebord (38).

13. Procédé de fabrication d'une structure en nid d'abeille (16) en matériau céramique comprenant les étapes suivantes :
- fourniture d'un mélange comprenant une poudre céramique et une résine organique photosensible, et
- fabrication par stéréolithographie de la structure en nid d'abeille (16) comprenant une pluralité d'alvéoles (22), chaque alvéole (22) comprenant une paroi (26) délimitant une cavité traversante (32) débouchant sur une première face (18) et sur une deuxième face (20) respectivement au niveau d'une première ouverture (34) et d'une deuxième ouverture (36), au moins une alvéole (22) comprenant un rebord (38) venu de matière avec la paroi (26) et en saillie de ladite paroi (26) au niveau d'au moins une des ouvertures (34 ; 36).

14. Procédé de fabrication selon la revendication 13, comprenant en outre les étapes suivantes :
- nettoyage de la structure (16) avec un solvant,
- déliantage thermique, et
- frittage thermique.

15. Procédé de fabrication selon la revendication 14, comprenant une étape ultérieure de fixation d'une peau (14) composite sur au moins une des faces (18 ; 20) sur laquelle affleure au moins un rebord (38), la peau (14) étant liée à chaque rebord (38).

## Patentansprüche

1. Keramische Wabenstruktur (16), umfassend eine Vielzahl von Zellen (22), wobei jede Zelle (22) eine periphere Wand (26) umfasst, die einen querenden Hohlraum (32) begrenzt, wobei der querende Hohlraum (32) auf einer ersten Seite (18) und auf einer zweiten Seite (20) auf dem Niveau einer ersten Öffnung (34) bzw. einer zweiten Öffnung (36) mündet, wobei die mindestens eine Zelle (22) einen Rand (38) umfasst, der einstückig mit der Wand (26) die Zelle (22) ist und von der Wand (26) auf dem Niveau mindestens einer der Öffnungen (34, 36) vorspringt.

2. Struktur (16) nach Anspruch 1, wobei die Wand (26) und der Rand (38) die einstückig mit der Wand (26) ist, jeweils eine äußere Fläche (44; 46) auf dem Niveau der Öffnung (34; 36) aufweisen, wobei die äußere Fläche (44) der Wand (26) mit der äußeren Fläche (46) des Rands (38) bündig ist.

3. Struktur (16) nach einem der Ansprüche 1 oder 2, wobei der Rand (38) die Öffnung (34; 36) nur teilweise verschließt.

4. Struktur (16) nach einem der Ansprüche 1 bis 3, wobei der Flächeninhalt (Aᵣ) des querlaufenden Abschnitts des Rands (38), gesehen auf dem Niveau der Öffnung (34; 36), im Bereich zwischen 1 % und 75 % des maximalen Flächeninhaltes (Aₐ) des transversalen Abschnitts des querlaufenden Hohlraums (32) ist, vorzugsweise zwischen 30 % und 50 % des maximalen Flächeninhaltes (Aₐ) des querlaufenden Abschnitts des querenden Hohlraums (32).

5. Struktur (16) nach einem der Ansprüche 1 bis 4, wobei der Rand (38) ein Profil aufweist, das hin zu seiner freien Kante spitz zuläuft.

6. Struktur (16) nach einem der Ansprüche 1 bis 5, wobei der Rand (38) eine maximale Dicke (Eᵣ) von weniger oder gleich 100 % der Höhe (hᵣ) des Rands (38), vorzugsweise weniger oder gleich 80 % der Höhe (hᵣ) des Rands (38) aufweist.

7. Struktur (16) nach einem der Ansprüche 1 bis 6, wobei jede Zelle (22) einen polygonalen querlaufenden, vorzugsweise hexagonalen, Abschnitt aufweist.

8. Struktur (16) nach einem der Ansprüche 1 bis 7, wobei mindestens eine der ersten Seite (18) und der zweiten Seite (20) gekrümmt ist, wobei die Seite (18; 20) vorteilhafterweise einen Krümmungsradius von mindestens 40 Millimeter aufweist.

9. Struktur (16) nach Anspruch 8, wobei jede Seite (18; 20) gekrümmt ist, wobei jede Seite (18; 20) vorteilhafterweise einen Krümmungsradius von mindestens 40 Millimeter aufweist.

10. Struktur (16) nach einem der Ansprüche 1 bis 9, wobei die Wand (26) mindestens einer der Zellen (22) mindestens eine Aussparung (30) aufweist.

11. Struktur (16) nach einem der Ansprüche 1 bis 10, wobei die Wände (26) der Zellen (22) und der Rand oder die Ränder (38) durch Stereolithografie erhalten werden.

12. Struktur (16) nach einem der Ansprüche 1 bis 11, wobei eine Verbundhaut (14) auf mindestens einer der Seiten (18, 20) fixiert ist, auf der mindestens ein Rand (38) bündig ist, wobei die Haut (14) mit jedem Rand (38) verbunden ist.

13. Verfahren zum Herstellen einer keramischen Wabenstruktur (16), umfassend die folgenden Schritte:
- Liefern einer Mischung, umfassend ein keramisches Pulver und ein lichtempfindliches organisches Harz, und
- Herstellen, durch Stereolithographie, der Wabenstruktur (16), umfassend eine Vielzahl von Zellen (22), wobei jede Zelle (22) eine Wand (26) umfasst, die einen querenden Hohlraum (32) begrenzt, der jeweils auf eine erste Seite (18) und auf eine zweite Seite (20) auf dem Niveau einer ersten Öffnung (34) und einer zweiten Öffnung (36) mündet, wobei mindestens eine Zelle (22) einen Rand (38) umfasst, der einstückig mit der Wand (26) ist und von der Wand (26) auf dem Niveau mindestens einer der Öffnungen (34; 36) vorspringt.

14. Verfahren zum Herstellen nach Anspruch 13, umfassend außerdem die folgenden Schritte:
- Reinigen der Struktur (16) mit einem Lösemittel,
- thermisches Entbindern, und
- thermisches Sintern.

15. Verfahren zum Herstellen nach Anspruch 14, umfassend einen letzten Schritt des Fixierens einer Verbundhaut (14) auf mindestens einer der Seiten (18, 20), auf der mindestens ein Rand (38) bündig ist, wobei die Haut (14) mit jedem Rand (38) verbunden ist.

## Claims

1. A ceramic honeycomb structure (16) comprising a plurality of cells (22), each cell (22) comprising a peripheral wall (26) delimiting a through cavity (32), the through cavity (32) opening out on a first face (18) and on a second face (20) respectively at a first opening (34) and a second opening (36), wherein at least one cell (22) comprises a rim (38) integral with the wall (26) of the cell (22) and protruding from said wall (26) at least at one of the openings (34, 36).

2. The structure (16) according to claim 1, wherein the wall (26) and the rim (38) integral with said wall (26) each have an outer surface (44; 46) at the opening (34; 36), the outer surface (44) of the wall (26) being flush with the outer surface (46) of the rim (38).

3. The structure (16) according to any one of claims 1 or 2, wherein the rim (38) only partially closes off the opening (34; 36).

4. The structure (16) according to any one of claims 1 to 3, wherein the area (Aᵣ) of the cross-section of the rim (38) taken at the opening (34; 36) is between 1% and 75% of the maximum area (Aₐ) of the cross-section of the through cavity (32), preferably between 30% and 50% of the maximum area (Aₐ) of the cross-section of the through cavity (32).

5. The structure (16) according to any one of claims 1 to 4, wherein the rim (38) has a tapered profile toward its free edge.

6. The structure (16) according to any one of claims 1 to 5, wherein the rim (38) has a maximum thickness (Eᵣ) of less than or equal to 100% of the height (hᵣ) of the rim (38), preferably less than or equal to 80% of the height (hᵣ) of the rim (38).

7. The structure (16) according to any one of claims 1 to 6, wherein each cell (22) has a polygonal cross-section, preferably a hexagonal cross-section.

8. The structure (16) according to any one of claims 1 to 7, wherein at least one of the first face (18) and the second face (20) is curved, said (18; 20) face advantageously having a curve radius of at least 40 millimeters.

9. The structure (16) according to claim 8, wherein each face (18; 20) is curved, each face (18; 20) advantageously having a curve radius of at least 40 millimeters.

10. The structure (16) according to any one of claims 1 to 9, wherein the wall (26) of at least one of the cells (22) has at least one recess (30).

11. The structure (16) according to any one of claims 1 to 10, wherein the walls (26) of the cells (22) and the rim(s) (38) are obtained by stereolithography.

12. The structure (16) according to any one of claims 1 to 11, wherein a composite skin (14) is fixed on at least one of the faces (18; 20) on which at least one rim (38) is flush, the skin (14) being bonded to each rim (38).

13. A method for manufacturing a ceramic honeycomb structure (16), comprising the following steps:
- providing a mixture comprising a ceramic powder and an organic photosensitive resin, and
- manufacturing, by stereolithography, the honeycomb structure (16) comprising a plurality of cells (22), each cell (22) comprising a wall (26) delimiting a through cavity (32) opening out on a first face (18) and on a second face (20) respectively at a first opening (34) and a second opening (36), at least one cell (22) comprising a rim (38) integral with the wall (26) and protruding from said wall (26) at least at one of the openings (34; 36).

14. The manufacturing method according to claim 13, further comprising the following steps:
- cleaning the structure (16) with a solvent,
- thermal debinding, and
- thermal sintering.

15. The manufacturing method according to claim 14, comprising a subsequent step for fastening a composite skin (14) on at least one of the faces (18; 20) on which at least one rim (38) is flush, the skin (14) being connected to each rim (38).
